# EUROPEAN PATENT SPECIFICATION

(11) **EP 0 673 591 B1**
(45) Date of publication and mention of the grant of the patent: **21.05.2003**
(21) Application number: 95610012.7
(22) Date of filing: 17.03.1995
(51) Int. Cl.: A01B 61/02

(54) **Towed agricultural implement**
Gezogenes landwirtschaftliches Gerät
Machine agricole remorquée

(30) Priority: 21.03.1994 DK 32494
(43) Date of publication of application: 27.09.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, DK-6470 Sydals (DK)
(74) Representative: Raffnsöe, Knud Rosenstand

(56) References cited:
- DE-A- 3 134 525
- DE-C- 950 245
- FR-A- 1 065 397
- FR-A- 2 080 787
- FR-A- 2 394 236
- US-A- 2 148 311
- US-A- 3 212 588

## Description

The present invention relates to a towed agricultural mower comprising a frame with ground wheels and a tongue for connection with a connecting device on a tractor connected with or comprising the rear lift arms of the tractor, the mowing part of the mower comprising knife discs and being spring suspended in the frame.

Mowers of this art are well known e.g. from EP-A-0 619 063, EP-A-0 634 092, US-A-5 060 462, US-A-4 991 383, US-A-5 076 042, WO-A-91/11099.

Modern agricultural mowers make such an effective processing that the travelling speed is only restricted by the danger of a breakdown due to the encounter with a stone or similar obstacles. The purpose of the present invention is to procure a towed agricultural mower where the connection between the pulling tractor and the mower itself can absorb some of the shock effects from the encounter with an obstacle.

According to the invention, this is obtained by connecting the tongue with the connecting device in such a way that by overcoming a force of a certain value the end of the tongue at the connecting device will move backwards and upwards from a position of rest defined by an abutment. Hereby is achieved that the front end of the tongue made to be connected with the tractor moves backwards and upwards from the tractor if the force required for pulling the mower exceeds a certain value. There is thus obtained a limit to how hard the tractor can pull the mower against an obstacle, for instance a stone.

In an embodiment the two parts, ie. the connecting device and the tongue, are mutually connected by means of a pin on one of the parts which is bedded in a slot in the other part where the slot extends obliquely upwards and backwards and the pin extends horizontally transverse to the driving direction. Thus, said certain value will depend on the force by which the end of the tongue rests against the connecting device, and on the oblique direction of the slot.

In another embodiment, an articular bar is hinged to the connecting device and further hinged to the tongue so that the articular bar can pivot around a substantially horizontal axis transverse to the driving direction. The abutment in this embodiment comprises preferably a stopper for the articular bar.

In a further embodiment, the tongue in the position of rest extends over the connecting device and abuts on it.

The invention will be explained in detail in the following by means of embodiment examples with reference to the drawings, in which
Fig. 1 shows a first embodiment of a towed agricultural mower according to the invention seen from the side,
Fig. 1a is a detail from Fig. 1 seen from above,
Fig. 2 shows another embodiment of the invention seen from the side,
Fig. 2a is a detail from Fig. 2 seen from above, and
Fig. 3 shows a third embodiment of the invention seen from the side.

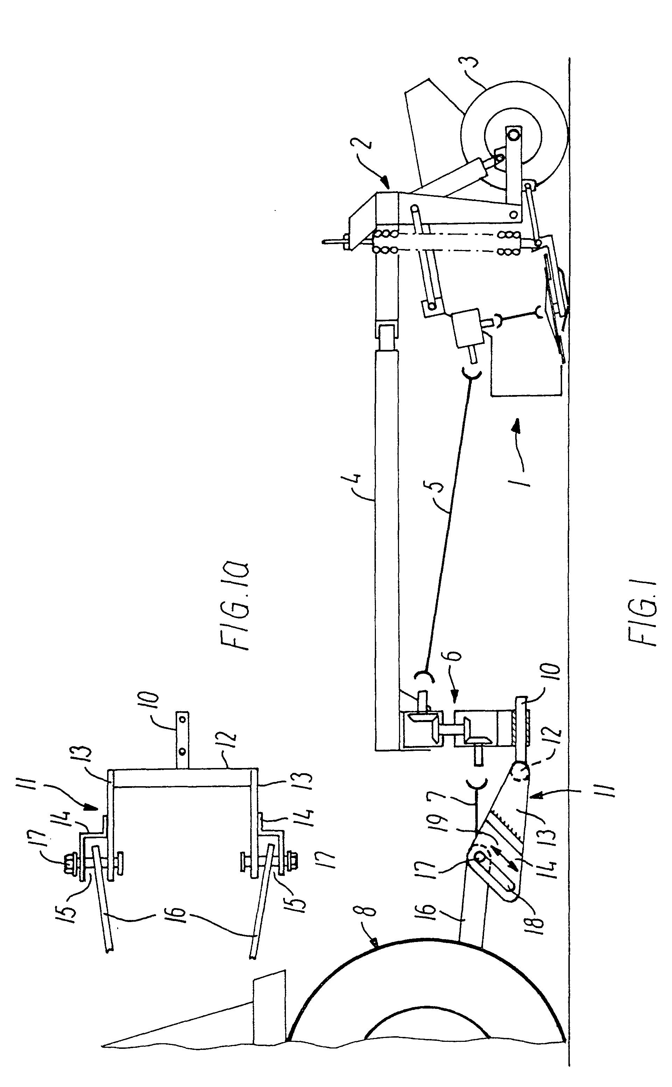

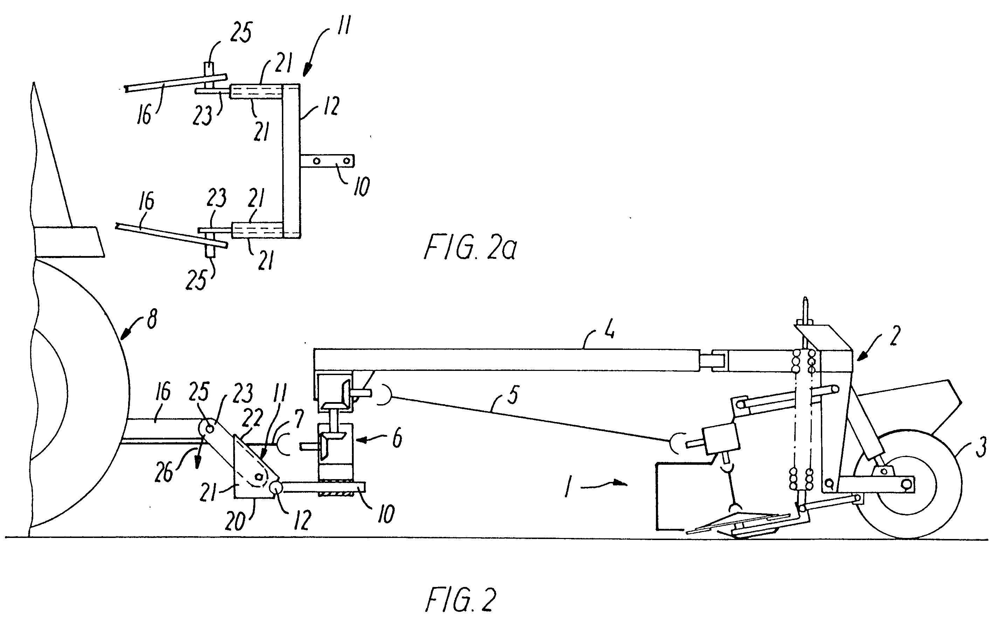

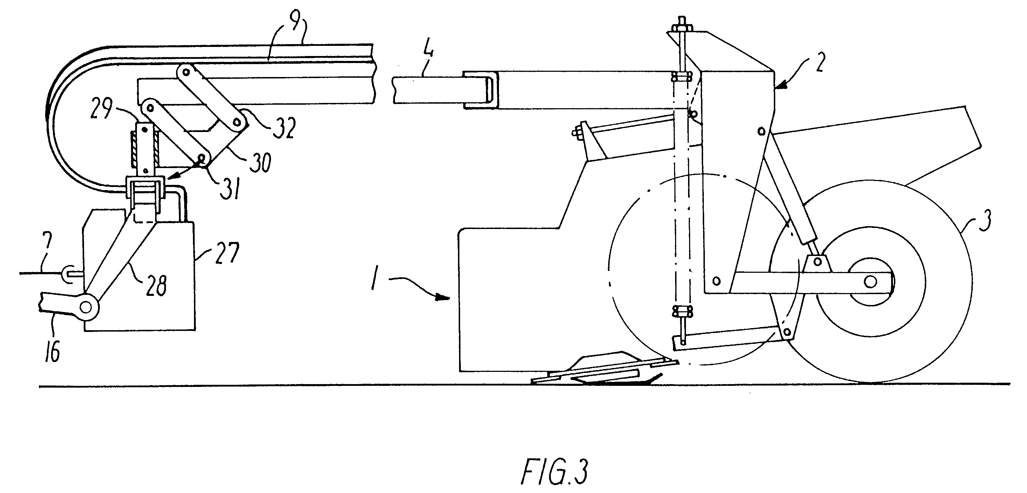

Figs. 1, 2 and 3 all show a per se known mower 1 suspended in a frame 2 with ground wheels 3 and a tongue 4. The mowers 1 in Figs. 1 and 2 are mechanically driven through a shaft 5 which by means of a swing gear 6 consisting of two integrated angular gears is driven through a telescopic cardan shaft 7 from the power take-off shaft of the pulling tractor 8. The mower in Fig. 3 is hydraulically driven by hydraulic oil provided through conduits 9.

In the two embodiments with mechanical power transmission, the front end of the tongue 4 is connected with the upper mitre gear of the swing gear 6 while the lower mitre gear is connected with a pin 10 of a coupler 11 in order that the mower is tiltable relative to the tractor around an axis parallel to the driving direction.

In the embodiment shown in Fig. 1, the coupler 11 comprises besides the pin 10 a crosspiece 12 in the middle of which the pin 10 is mounted and by whose ends, two plates 13 are rigidly fastened. Furthermore, on the plates 13, profiles 14 are fastened for making slits 15 to receive the ends of the rear lift arms 16 of the tractor 8. These arms are connected to the coupler 11, bolts 17 leading through slots 18 in the plates 13 and the profiles 14 whereby the coupler 11 and with it the front end of the tongue 4 are movable relative to the lift arms 16 as shown by a double arrow 19.

Due to the weight of the part of the mower which is supported by the lift arms 16, the coupler 11 will under normal operation be in the position shown in Fig. 1 in relation to the bolts 17 and the lift arms 16. If the mower 1 encounters an obstacle during work, this entails, however, that a shock effect is conveyed through the tongue 4 to the coupler 11 which will slide backwards and upwards, the bolts 17 moving relatively downwards and forwards in the slots 18. At the same time, the telescopic cardan shaft 7 is extended. After the obstacle has been passed, the coupler 11 will again due to the gravity from the mower slide forwards and downwards in relation to the bolts 17 to the normal operating position shown in Fig. 1. The coupler will thus protect both the mower 1 itself and its suspension, and not least the swing gear 6.

In the embodiment shown in Figs. 2 and 2a, the coupler 11 comprises instead of the plates 13 with the profiles 14, two members 20 substantially shaped as triangular boxes with side walls 21 and an oblique top wall 22. In each of these two box-shaped members 20 an articular bar 23 is pivotally fastened around a pin 24. The articular bars 23 are by means of other pins 25 coupled to the rear lift arms 16 of the tractor with the possibility of pivoting relative to these.

The embodiment shown in Fig. 2 functions substantially in the same way as the embodiment in Fig. 1, the articular bars 23, in case the mower encounters an obstacle, swinging upwards around the pins 25 and making a relative movement as indicated by the arrow 26 in relation to the box-shaped members 20 which thus swing backwards and upwards together with the front end of the tongue 4.

Fig. 3 shows a mower which is hydrostatically driven, an oil tank 27 with pump being suspended in the liftarms 16 and the pump is driven through the cardan shaft 7. The oil tank 27 is suspended in a frame 28 with a vertical pin 29 on which a coupling member 30 is pivotally mounted. Four parallel arms 31, 32 (two on each side) connect the coupling member 30 with the tongue 4. This enables the end of the tongue 4 to swing upwards and backwards relative to the coupling member 30 until the lower parallel arm 31 on each side has reached a position where it strikes the upper parallel arm 32 which it does when the mower 1 encounters an obstacle. In the shown embodiment, the lower parallel arm 31 will strike the upper parallel arm 32 at a time where the parallel arms are in a position past the vertical relative to the normal operating position shown in Fig. 3. This means that it will be necessary actively to bring the end of the tongue 4 to the operating position, for instance by stopping and backing the tractor shortly. In the operating position, the tongue 4 abuts on the coupling member 30.

The embodiment shown in Fig. 3 offers the advantage over the two embodiments with mechanical power transmission that while the movement of the tongue 4 relative to the tractor 8 in last-mentioned case is restricted by the permissible longitudinal changement of the cardan shaft 7, the embodiment in Fig. 3 is not subject to such restrictions because the permissible movement between the tongue 4 and the coupling member 30 is restricted by the length of the conduits 9 which can simply be adjusted to the existing conditions.

## Claims

1. Towed agricultural mower comprising a frame (2) with ground wheels (3) and a tongue (4, 6, 10, 12; 4) for connection with a connecting device (16; 16, 28-30) on a tractor connected with or comprising the rear lift arms (16) of the tractor (8), the mowing part (1) of the mower comprising knife discs and being spring suspended in the frame (2), **characterized in that** the tongue (4, 6, 10 12; 4) is connected with the connecting device (16; 16, 28-30) in such a way that by overcoming a force of a certain value the end of the tongue at the connecting device will move backwards and upwards from a position of rest defined by an abutment (18; 22; 30).

2. Agricultural mower according to claim 1, **characterized in that** the two parts, ie. the connecting device (16) and the tongue (4), are mutually connected by means of a pin (17) on one of the parts which is bedded in a slot (18) in the other part where the slot (18) extends obliquely upwards and backwards and the pin (17) extends horizontally transverse to the driving direction.

3. Agricultural mower according to claim 1, **characterized in that** an articular bar (23; 31, 32) is hinged to the connecting device (16; 16, 28-30) and further hinged to the tongue (4, 6, 10 12; 4) so that the articular bar (23) can pivot around a substantially horizontal axis transverse to the driving direction.

4. Agricultural mower according to claim 3, **characterized in that** the abutment comprises a stopper (22) for the articular bar (23).

5. Agricultural mower according to claim 3, **characterized in that** the tongue (4) in the position of rest extends over the connecting device (30) and abuts on it.

## Patentansprüche

1. Gezogene, landwirtschaftliche Mähvorrichtung, mit einem Rahmen (2) mit Bodenrädern (3) und einer Deichsel (4, 6, 10, 12; 4) zur Verbindung mit einer Verbindungsvorrichtung (16; 16, 28-30) an einer Zugmaschine, die mit den hinteren Hubarmen (16) der Zugmaschine (8) verbunden ist oder diese aufweist, wobei die Mäheinrichtung (1) der Mähvorrichtung Messerscheiben aufweist und in dem Rahmen (2) federnd aufgehängt ist,
**dadurch gekennzeichnet, dass** die Deichsel (4, 6, 10, 12; 4) mit der Verbindungsvorrichtung (16; 16, 28-30) derart verbunden ist, dass durch Überwinden einer Kraft mit einem bestimmten Wert sich das Ende der Deichsel an der Verbindungsvorrichtung ausgehend von einer Ruheposition, die durch eine Anlageeinrichtung (18; 22; 30) definiert wird, nach hinten und nach oben bewegt.

2. Landwirtschaftliche Mähvorrichtung nach Anspruch 1,
**dadurch gekennzeichnet, dass** die beiden Teile, d.h. die Verbindungsvorrichtung (16) und die Deichsel (4), mittels eines Stifts (17) an einem der Teile, der in einen Schlitz (18) in dem anderen Teil eingebettet ist, miteinander verbunden sind, wobei sich der Schlitz (18) schräg nach oben und nach hinten erstreckt und wobei sich der Stift (17) horizontal, quer zu der Fahrtrichtung erstreckt.

3. Landwirtschaftliche Mähvorrichtung nach Anspruch 1,
**dadurch gekennzeichnet, dass** eine Gelenkstange (23; 31, 32) mit der Verbindungsvorrichtung (16; 16, 28-30) gelenkig verbunden ist und ferner mit der Deichsel (4, 6, 10, 12; 4) gelenkig verbunden ist, so dass die Gelenkstange (23) um eine im Wesentlichen horizontale Achse quer zu der Fahrtrichtung schwenkbar ist.

4. Landwirtschaftliche Mähvorrichtung nach Anspruch 3,
**dadurch gekennzeichnet, dass** die Anlageeinrichtung einen Anschlag (22) für die Gelenkstange (23) aufweist.

5. Landwirtschaftliche Mähvorrichtung nach Anspruch 3,
**dadurch gekennzeichnet, dass** die Deichsel (4) sich in der Ruheposition über der Verbindungsvorrichtung (30) erstreckt und an dieser anliegt.

## Revendications

1. Faucheuse agricole traînée comprenant un cadre (2) avec des roues au sol (3) et un timon (4, 6, 10, 12 ; 4) pour l'accouplement avec un dispositif d'accouplement (16 ; 16, 28-30) sur un tracteur raccordé avec ou comprenant les bras de relevage arrières (16) du tracteur (8), la partie fauchage (1) de la faucheuse comprenant des disques à lame et étant suspendue par ressorts dans le cadre (2), **caractérisée par le fait que** le timon (4, 6, 10, 12 ; 4) est raccordé avec le dispositif d'accouplement (16 ; 16, 28-30) de telle façon que, en surmontant une force d'une certaine valeur, l'extrémité du timon au niveau du dispositif d'accouplement se déplace vers l'arrière et vers le haut à partir d'une position de repos définie par un point d'appui (18 ; 22 ; 30).

2. Faucheuse agricole selon la revendication 1, **caractérisée par le fait que** les deux parties, à savoir le dispositif d'accouplement (16) et le timon (4), sont mutuellement accouplées au moyen d'un axe (17) sur une des parties qui est engagé dans une fente (18) de l'autre partie, où la fente (18) s'étend en oblique vers le haut et vers l'arrière et l'axe (17) s'étend horizontalement, transversalement par rapport à la direction du déplacement de la faucheuse.

3. Une faucheuse agricole selon la revendication 1, **caractérisée par le fait qu'**une barre articulée (23 ; 31, 32) est reliée par charnière au dispositif d'accouplement (16 ; 16, 28-30) et reliée aussi par charnière au timon (4, 6, 10, 12 ; 4) de telle sorte que la barre articulée (23) peut pivoter autour d'un axe substantiellement horizontal, transversal par rapport à la direction du déplacement.

4. Faucheuse agricole selon la revendication 3, **caractérisée par le fait que** le point d'appui comprend une butée (22) pour la barre articulée (23).

5. Faucheuse agricole selon la revendication 3, **caractérisée par le fait que** le timon (4) dans la position de repos s'étend au-dessus du dispositif d'accouplement (30) et s'appuie contre lui.
